# EUROPEAN PATENT APPLICATION

(11) **EP 3 214 872 A1**
(43) Date of publication of application: **06.09.2017**
(21) Application number: 17158699.3
(22) Date of filing: 01.03.2017
(51) Int. Cl.: H04W 48/10, H04W 28/08, H04W 48/18, H04W 74/08

(54) **STEERING OF INITIAL AND SUBSEQUENT ACCESS**

(30) Priority: 01.03.2016 EP 16158062
(71) Applicant: IPCom GmbH & Co. KG, 82049 Pullach (DE)
(72) Inventor: SCHMIDT, Andreas, 38124 Braunschweig (DE); BIENAS, Maik, 38170 Schöppenstedt (DE); HANS, Martin, 31162 Bad Salzdetfurth (DE)
(74) Representative: Tomlinson, Edward James

(57) **Abstract**

The present invention provides a method performed by a user equipment, UE, device to access a mobile communications network, the method comprising receiving control information from one or more base stations, the control information including one or more configuration parameters for controlling initial access between a plurality of access systems; and performing an initial access attempt to a first access system in accordance with the received control information, characterized in that in response to the initial access attempt, the UE device receives one of a radio resource control, RRC, connection reject message and an RRC connection resume message from the first access system, the RRC message informing the UE device to perform a second access attempt to an indicated second access system, and the UE device performs said second access attempt.

## Description

The present invention relates to carrier aggregation as proposed for use in LTE-Advanced (3GPP Release 10 onwards) and in particular access mechanisms therefor.

Carrier aggregation, CA, is proposed for use in LTE-Advanced (i.e. from 3GPP Rel-10 onwards) in order to increase the bandwidth, and thereby increase the bitrate. In order to guarantee backward compatibility with Rel-8 and Rel-9 UEs, it was decided to enable aggregation of legacy Rel-8/Rel-9 carriers. CA can be used for both frequency division duplex, FDD, and time division duplex, TDD.

Each aggregated carrier is referred to as a component carrier, CC. Each CC can have a bandwidth of 1.4, 3, 5, 10, 15 or 20 MHz and a maximum of five CCs can be aggregated, hence the maximum aggregated bandwidth is 100 MHz. In FDD the number of aggregated carriers can be different in a downlink, DL, and an uplink, UL, direction. However, the number of UL CCs is always equal to or lower than the number of DL CCs. The individual CCs can also be of different bandwidths. For TDD, the number of CCs as well as the bandwidth of each CC will naturally be the same for DL and UL.

The easiest way to arrange aggregation would be to use contiguous CCs within the same operating frequency band (as defined for LTE), so called intra-band contiguous. This might not always be possible, due to operator frequency allocation scenarios. For non-contiguous allocation it could either be intra-band, i.e. the CCs belong to the same operating frequency band, but have a gap, or gaps, in between, or it could be inter-band, in which case the CCs belong to different operating frequency bands.

A radio resource control, RRC, connection is only handled by one cell, namely a primary serving cell, PCell, served by a primary CC (DL and UL PCC). It is also on the DL PCC that a UE receives non-access stratum, NAS, information, such as security parameters. In RRC_IDLE the UE listens to system information broadcast, SIB, messages on the DL PCC. On the UL PCC all the PUCCH data is sent. The other component carriers are all referred to as secondary CCs (DL and UL SCC), serving secondary serving cells, SCells. The SCCs may be added and removed as required, while the PCC is only changed at handover.

Carrier aggregation is described in more detail at a 3GPP internet site "www.3gpp.org/technologies/keywords-acronyms/101-carrier-aggregation-explained".

In 3GPP Releases 10 to 12 CA is restricted to aggregation of CCs that all reside in licensed frequency bands, i.e. parts of the frequency spectrum that are assigned to mobile network operators, MNOs, for exclusive use. In the course of Rel-13 3GPP is currently working on a mechanism to enable CA between a PCC residing in a licensed frequency band (LTE-PCell) and an SCC residing in the unlicensed frequency spectrum (LAA-SCell). This concept is known as licensed assisted access, LAA. Design targets for coexistence with other unlicensed spectrum deployments, including fairness with respect to Wi-Fi and other LAA services, is of primary importance. The findings of 3GPP's feasibility study on LAA were summarized in 3GPP TR 36.889.

With respect to downlink traffic on the PDSCH of an LAA-SCell, 3GPP concluded that a Cat 4 LBT (listen before talk) scheme with random back-off and variable contention window sizes would enable fair channel access and good coexistence with WiFi and other LAA networks. The key parameters of such a scheme are currently discussed in detail as part of the ongoing corresponding LAA work item (WI). With respect to uplink traffic on the PUSCH of an LAA-SCell, 3GPP recommended to support an UL LBT scheme which is different from the DL LBT as the UL access is always scheduled and controlled by the eNB that is offering the respective LTE-PCell.

With respect to Random Access, 3GPP concluded that contention-based random access is not supported on an LAA-SCell, but contention-free random access may be supported on an LAA-SCell if a need for Random Access on the LAA-SCell is detected (e.g., for UL timing alignment).

In Rel-12 Dual Connectivity the concept of random access preamble dropping was defined (i.e. power ramping is based on the number of actually transmitted preambles rather than on the number of preamble transmission opportunities). 3GPP agreed to use this concept as a baseline in LAA, where a UE might be required to drop a random access preamble on the LAA-SCell due to LBT.

In this invention, we predominantly discuss carrier aggregation with a PCell and at least one SCell, and licensed assisted access to the unlicensed spectrum with an LTE-PCell and at least one LAA SCell. However, there is no reason to restrict the embodiments to these two situations. The present invention extends to a first access system (or "first system") and a second access system (or "second system") regardless of the underlying licensing model (licensed frequency bands vs. unlicensed frequency bands) or technical nature of the radio access links (e.g., GSM, UMTS, LTE, WLAN, etc.) as summarized in Table 1 which shows example embodiments of a first and second access system.

**Table 1**

| **Generalization Criteria** | **First Access System** | **Second Access System** |
|---|---|---|
| Licensing Model | Licensed bands | Unlicensed bands |
| Radio Access Technology | LTE | UMTS |
| LTE Carrier Aggregation (CA) | Component Carrier 1 | Component Carrier 2 |
| Licensed Assisted Access (LAA) to the Unlicensed Spectrum | LTE PCell | LAA SCell |

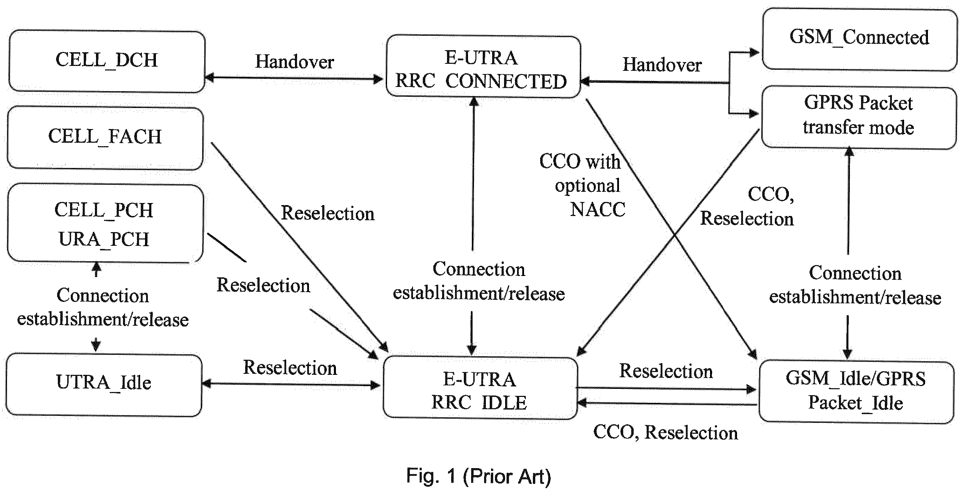

Fig. 1 shows a state diagram from the prior art including the UMTS (UTRA, 3G) mobile terminal states CELL_DCH, CELL_FACH, CELL_PCH/URA_PCH, and UTRA_Idle, the LTE (E-UTRA, 4G) mobile terminal states RRC CONNECTED and RRC IDLE and the GSM (GERAN, 2G and 2.5G) mobile terminal states GSM_Connected, GPRS Packet Transfer Mode, and GSM_Idle/GPRS Packet_Idle. More details are given in 3GPP TS 36.331.

According to a first state transition, a handover may be carried out between E-UTRA (i.e. a base station operating according to LTE) and UTRAN (i.e. a base station operating according to UTMS). According to a second state transition, a handover may be carried out between E-UTRA (i.e. a base station operating according to LTE) and GERAN (i.e. a base station operating according to GSM). Third state transitions may occur between states of the UTRAN, the GERAN, and the E-UTRAN, e.g. in case of cell reselection without the handover of an active connection. It should be noted that state transitions between states of the UTRAN and GERAN are omitted for simplicity but may also be possible.

A fourth state transitions may occur between states of the same radio access technology, e.g. when a connection is released or a connection is established. In case of LTE, the mobile terminal (UE) is in RRC_CONNECTED when an RRC connection has been established for transfer of unicast data to/from the mobile terminal. If this is not the case, i.e. no RRC connection is established, the mobile terminal (UE) is in RRC_IDLE state. Another state, RRC_SUSPENDED, is currently under development in 3GPP. A UE in RRC_CONNECTED mode may be moved to RRC_SUSPENDED instead of RRC_IDLE. In this state the behaviour is pretty much identical with RRC_IDLE. The difference is that the UE and the eNB keep most of the UE context in place to allow a faster resumption of the RRC-Connection. The three RRC (Radio Resource Control) states RRC_IDLE, RRC_SUSPENDED and RRC_CONNECTED in E-UTRA can be further described as follows.
RRC_IDLE and RRC_SUSPENDED:
   Mobile terminal specific DRX (Discontinuous Reception) may be configured by upper protocol layers;
   Mobility is controlled by the mobile terminal;
   The mobile terminal acquires system information (SI),monitors a paging channel to detect incoming calls and SI change and performs neighbouring cell measurements for cell (re-)selection.
   To change from RRC_IDLE or RRC_SUSPENDED to RRC_CONNECTED state the UE performs random access (e.g., on the PRACH).
RRC_CONNECTED:
   Mobility is controlled by the radio access network (handover and cell change order);
   The mobile terminal may be configured with mobile terminal specific DRX (Discontinuous Reception) at lower protocol layers.
   The mobile terminal acquires system information (SI),monitors a paging channel and/or SIB (system information block) Type 1 content to detect SI change, monitors control channels associated with the shared data channel to determine if data is scheduled for it, performs neighbouring cell measurements and measurement reporting to assist the network in making handover decisions, and provides channel quality and feedback information to the radio access network.
   The mobile terminal may transition from RRC_CONNECTED to RRC_IDLE state in various cases e.g., after detecting an event of Radio Link Failure (RLF).
   The mobile terminal may also be actively moved by the eNB to RRC_SUSPENDED state. This state is similar to RRC_IDLE except that UE and eNB keep the context (security, bearer, ...) for quick resumption of the RRC-Connection at a later point in time.

When a user equipment, UE, is switched on for the very first time, it will start searching for the network of the Mobile Network Operator (MNO) where the user is subscribed to (= HPLMN). The carrier frequencies typically used by an MNO are stored in the UE. The UE needs to successively search for each stored frequency until it detects synchronisation signals with sufficient power. Then the UE synchronises with the cell found in order to read the Master Information Block (MIB) and some System Information Blocks (SIBs) required for initial access to the network. From SIB Type 1 the UE knows the PLMN-ID(s) of the network it has found and may now check whether the frequency it is currently using belongs to its HPLMN (or, in case of roaming, to an equivalent PLMN). If no matching PLMN can be found, the UE has to start the "initial cell search" procedure again on another carrier frequency.

The next step is known as random access procedure, RAP, in which the network will be informed for the first time that some UE is trying to get access to the network. At this stage, the UE does not have any dedicated resources or channels available to inform the network about its desire to connect. Consequently, the UE has to submit a request over a shared channel, namely the Physical Random Access Channel (PRACH). In the context of the present document "resources on the PRACH" are defined as resource blocks in the LTE UL time/frequency grid plus a number of preambles (sometimes called "signatures") with good periodic correlation properties (e.g., Zadoff-Chu Sequences).

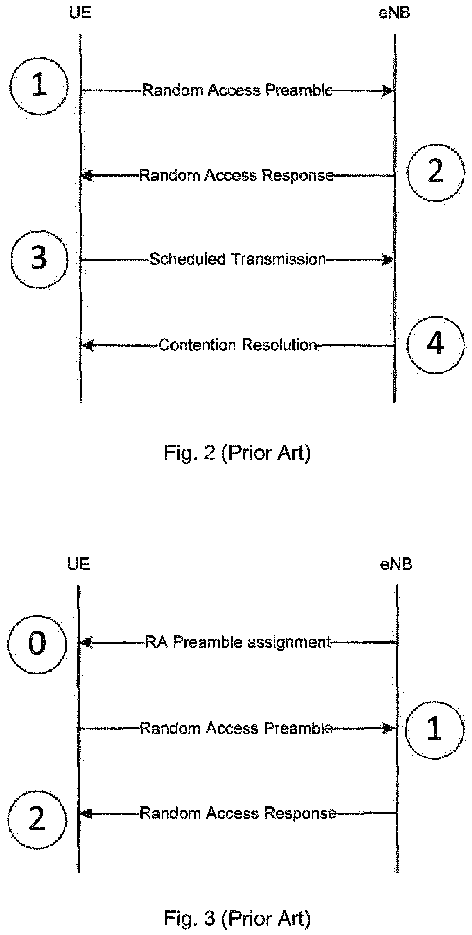

In principle there are two options for using the resources provided by the PRACH:
(i) Contention Based RAP
   UEs trying to access the PRACH are picking their "Random Access Preamble" and time slot for usage in Message #1 randomly from the set of configured PRACH resources. The problem is that many other UEs in the same cell may select the same PRACH resources, so there is a risk of collision among requests coming from various other UEs. The message flow for the contention based RAP is shown in Fig. 2.
(ii) Contention Free (or non-contention based) RAP
   Here, the network can instruct a UE to use a unique signature to prevent its request (Message #1) from colliding with requests coming from other UEs. The message flow for the contention free RAP is shown in Fig. 3.

The total amount of 64 "random access preambles" may be divided into a first set ("Group A") for contention based random access RAP and a second set ("Group B") for contention free RAP. Initial access (i.e. the transition from RRC_IDLE to RRC_CONNECTED) is always contention based. More details about the RAP in LTE can be found in TS 36.300 (section 10.1.5) and TS 36.321 (section 5.1).

The four steps of the contention based variant of the RAP (as depicted in Fig. 2) are briefly described below:
Step 1:
   The UE selects randomly one of the available random access preambles (from Group A) and one of the configured time slots.
   The UE derives a RA-RNTI from the selected time slot and frequency resource used for transmission of the preamble. This RA-RNTI is used later to address the resource assignment for the random access response (RAR) to the UE.
   If the UE does not receive any response from the network, it simply increases its transmission power (in predetermined steps) and sends the selected random access preamble again. If message 2 is still not received, the UE stops Random Access when the configured limit for retries or the maximum transmit power is reached.
Step 2:
   The eNB sends a "random access response" message on the DL-SCH channel. This DL message is generated by the MAC sub layer and may carry multiple instances of random access responses. The resource assignment information for this DL message is addressed to the RA-RNTI (which is calculated from the specific time-frequency resource used in Step 1 on the UL). Each RAR instance is identified by the ID of the random access preamble used in UL direction.
   This message carries the following information:
      The identity of the received random access preamble to address the relevant UE;
      Temporary C-RNTI: The eNB assigns an identity to the UE which is called Temporary C-RNTI to be used in Step 3;
      Timing advance value: The eNB may instruct the UE to change its uplink timing so it can compensate for the round trip delay caused by the UE's distance from the eNB;
      Uplink grant resource: The eNB assigns an initial PUSCH resource to the UE which can be used for UL transmissions.
Step 3:
   Using the indicated PUSCH resource, the UE sends an "RRC connection request" message generated by the RRC layer to the eNB.
   This message contains the following information:
      A UE identity (TMSI or random value) as follows:
         The TMSI is used if the UE has previously connected to the same network. With the TMSI value, the UE can be identified in the core network.
         The random value is used if the UE is connecting to the network for the very first time. The random value or TMSI is needed, because there is a possibility that the Temp-C-RNTI has been assigned to more than one UEs in the previous step, due to multiple requests coming at same time (collision).
         Connection establishment cause: This parameter shows the reason why the UE tries to connect to the network.
Step 4:
   The eNB then responds with a "RRC connection setup" message including a "contention resolution" MAC control element to the UE whose "RRC connection request" message was successfully received in Step 3.
   For initial access this message is addressed towards the temporary C-RNTI on PDCCH. It carries (an echo of) the TMSI or random value (from the previous step) and it contains a new C-RNTI which is supposed to be used by the UE from now on for further communication. Alternatively, the temporary C-RNTI is promoted to the C-RNTI for further usage.
   Only the UE that finds its own identity echoed back in the "contention resolution" MAC control element concludes that the RAP was successful and may proceed with time-aligned operation (i.e. request UL resources needed for the subsequent transmission of an "RRC connection setup complete" message in UL direction).

In the contention based variant of the RAP collision can occur because of the following example scenario: Two UEs send exactly the same random access preamble at same time in Step 1. If at least one of them is received by the eNB, the same temporary C-RNTI and UL Grant will be received by two UEs in Step 2. Then the eNB may be able to receive message 3 from only one UE or none of them due to interference in Step 3. In case one message 3 is received, the eNB sends the relating message 4 and the RAP will end successfully for the relating UE, while the other UE receives the wrong message 4 (i.e. the echoed identity is not belonging to this UE). If no message 3 is received, no relating message 4 is transmitted by the eNB.

The UEs which does not receive message 4 from the eNB will back-off after expiration of random access specific timers in Step 4. It is also thinkable that none of the UEs ever receives message 4.

The LTE UL resource grid consists of the following physical channels: PUSCH (a shared resource for UL user data), PRACH (located somewhere within the PUSCH region, providing random access resources), and PUCCH (for UL control data).

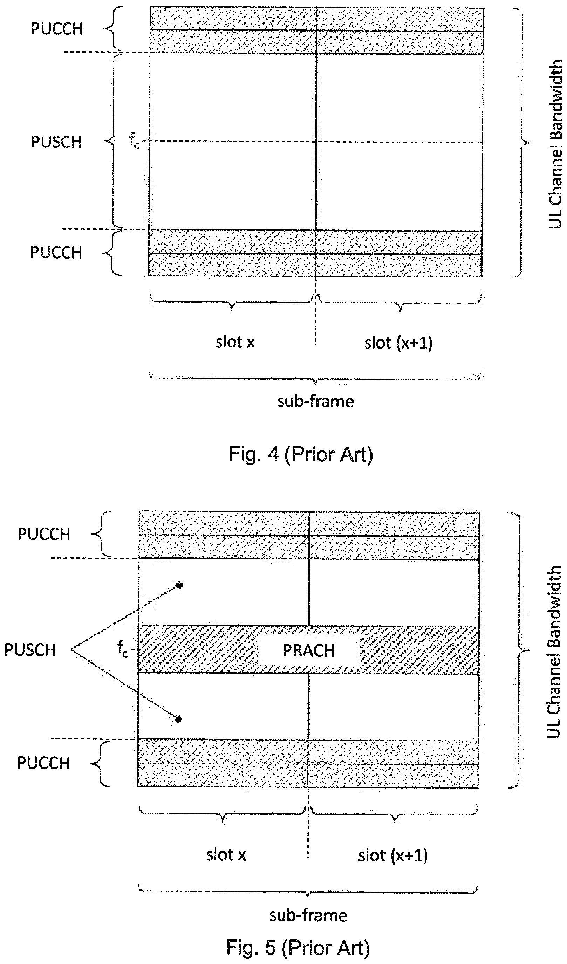

A simplified structure of the LTE UL time/frequency grid without PRACH resources is shown in Figure 4 and a simplified structure of the LTE UL time/frequency grid with PRACH resources is shown in Fig. 5. It is worth mentioning that PRACH resources are configurable with respect to width (in frequency dimension), length (in time dimension) and their overall position inside the PUSCH space, and that they don't have to be necessarily arranged in the centre of the carrier (i.e. around the centre frequency f_{c} of the respective carrier). Further it is configurable, how many out of 20 successive sub frames are allowed for PRACH transmission.

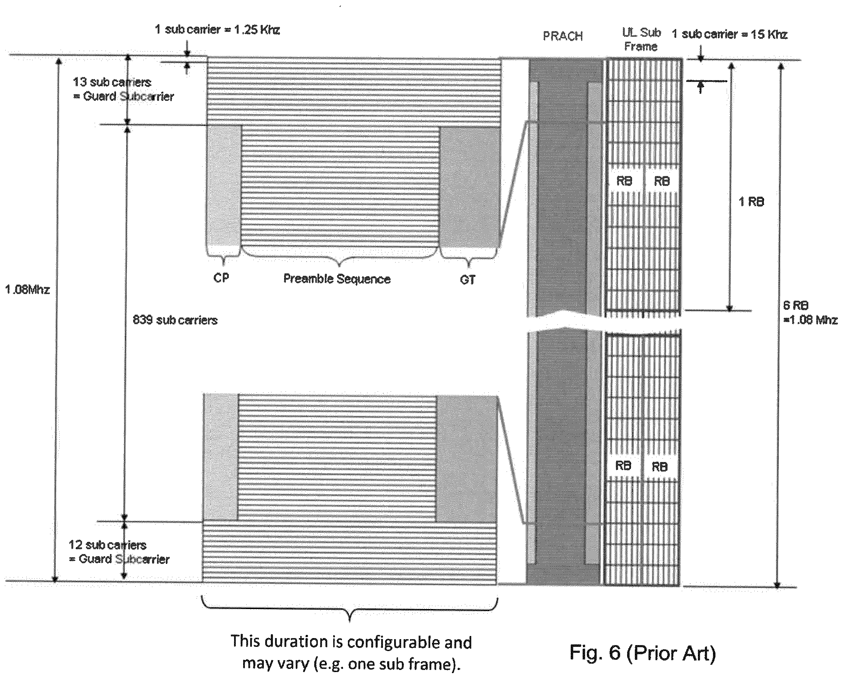

Fig. 6 gives a more detailed view for an example UL bandwidth of 1.08 MHz. As shown, the sub carrier spacing in the PRACH domain of the grid with 1.25 kHz differs from the regular sub carrier spacing applied to the PUCCH and PUSCH domains with 15 kHz (or 7.5 kHz in those sub frames that are used for MBMS).

As mentioned above, the resources used for the PRACH can be configured dynamically by an eNB within certain boundaries. Thus, the overall amount of PRACH resources per cell is always restricted. The more UEs request initial access the higher the risk of collision in any given cell.

In case of an overload situation such as in an emergency or congestion, the network may want to reduce the access overload in a given cell. In order to reduce the access attempts from a multitude of UEs, the network may signal (e.g., in SIB-Type2) access barring related parameters to UEs residing in coverage of the respective cell.

For access barring, a total number of 15 access classes (ACs) have been defined as follows:
- 0-9:: Mobile population number for regular users, stored in the SIM/USIM/eSIM.
- 10:: Category to be used for mobile originated emergency calls.
- 11-15:: Special categories (PLMN Staff, Police, etc.), also held in the SIM/USIM/eSIM.

For regular users with AC 0 - 9, their access is controlled by a threshold value (factor) and a time value. The UE simply generates a random number which is then compared against said threshold. If the random value falls above the threshold, the UE is required not to try to gain access to the network until a back off timer expires. The threshold value is one of the access barring related parameters in SIB Type2 and can be flexibly set to a lower value by the network, so that access from regular users is further restricted. Priority users with AC 11 - 15 can access the network without any restriction.

For users initiating emergency calls (AC 10) their access is controlled by a simple boolean value (barring or not) that is also part of the SIB Type2. For UEs with AC 11-15, their access is controlled by yet another boolean value (barring or not) that is also part of SIB Type2.

In addition to the above, the network may support access control based on the type of access attempt (i.e. mobile originating data or mobile originating signalling), in which indications to the UEs are broadcast to guide the behaviour of UE.

Another type of access control is the service specific access control (SSAC) which is used to apply independent access control for different telephony services (MMTEL) for mobile originating session requests from idle-mode UEs. In detail, the barring method for regular users is enhanced with service specific threshold values (factor) and time values for MMTel-Voice and MMTel-Video.

Finally, 3GPP defined extended access barring (EAB) in Rel-11 for MTC. Here, the network is enabled to signal in a new SIB Type14 barring conditions to the UEs. Barring rules may be based on a combination of access class(es) and PLNM-ID(s) stored in a UE's SIM/USIM. For example, with this method all UEs that are not in their H-PLMN (or in a PLMN that is equivalent to their H-PLMN) may be barred.

What all existing access barring methods have in common is that the barring information provided to UEs is cell specific (even in case of EAB which allows a combination of access classes and PLMN-IDs).

3GPP TR 36.889 (summarizing the findings of 3GPP's feasibility study on LAA) suggests that initial access from RRC_IDLE (or RRC_SUSPENDED) is currently only allowed on the LTE-PCell. In an LAA-SCell the random access procedure can only be initiated by the UE in its contention-free variant. For this contention-free access method, the UE will get a dedicated random access preamble (for example, via its LTE-PCell) for exclusive use on the LAA-SCell. Therefore, according to state of the art a preceding contention-based access on the LTE-PCell is required, i.e. accessing the LAA-SCell currently requires that a UE has to go through the RAP twice (and that twice the amount of PRACH resources needs to be provided).

In any LTE UL time/frequency resource grid, PRACH resources are a scarce resource. The MNO could reconfigure (i.e. enlarge) the PRACH space for more UEs (for example, in the time and/or frequency dimension), but this is only possible to a certain extent and would eat into the resources assigned to the PUSCH (cf. Figs. 4 and 5).

According to state-of-the-art, in an LAA scenario, UEs wanting to transition from RRC_IDLE (or RRC_SUSPENDED) to RRC_CONNECTED for initial access can only do so on the LTE-PCell. It is a drawback that no initial access is possible on the SCell.

WO 2014/182010 A1 describes a method for controlling traffic steering, with an example being an LTE system which steers some traffic to a WLAN. The UE receives control information via system information blocks with so-called bearer steering criteria which inform the UE which services should be served by LTE and which by the WLAN.

US 2014/0293776 A1 describes a technique for idle load balancing in which a cell's load conditions are communicated to UEs by means of system information blocks. In response to a random access preamble, a base station may send a random access response message informing the UE that the cell is overloaded and suggesting a different cell.

3GPP technical report TR 36.889 v 13.0.0 describes general issues relating to licensed assisted access using LTE with carrier aggregation.

The present invention provides a method performed by a user equipment, UE, device to access a mobile communications network, the method comprising receiving control information from one or more base stations, the control information including one or more configuration parameters for controlling initial access between a plurality of access systems; and performing an initial access attempt to a first access system in accordance with the received control information, characterized in that in response to the initial access attempt, the UE device receives a radio resource control, RRC, message from the first access system, the RRC message being one of an RRC connection reject message and an RRC, connection resume message, the RRC message informing the UE device to perform a second access attempt to an indicated second access system, and the UE device performs said second access attempt.

The plurality of access systems may be differing radio access technologies.

In a further aspect, the invention provides a base station for providing an access to a mobile communications network to a plurality of user equipment devices and configured to receive access attempts by the plurality of user equipment, UE, devices using a first access system, the base station being configured to transmit control information including one or more configuration parameters for controlling initial access between a plurality of access systems, characterized in that the base station is configured to send a radio resource control, RRC, message, the RRC message being one of an RRC connection reject message and an RRC connection resume message, the RRC message informing a UE device to perform a second access attempt to an indicated second access system.

In a yet further aspect, there is provided a user equipment, UE, device configured to access a mobile communications network, the device arranged to receive control information transmitted by one or more base stations, the control information including one or more configuration parameters for controlling initial access between a plurality of access systems; and perform an initial access attempt to a first access system in accordance with the received control information, characterized in that the UE device is arranged to receive a radio resource control, RRC, message from the first access system, the RRC message being one of an RRC connection reject message and an RRC connection resume message, the RRC message informing the UE device to perform a second access attempt to an indicated second access system, and to perform said second access attempt.

Preferred features of the inventions referred to above are provided in accordance with the dependent claims.

The invention provides a method for steering and redirecting initial access in a heterogeneous environment where multiple Radio Access Technologies (RATs) and multiple carriers per RAT are available simultaneously (e.g. LTE + LAA + WiFi + ...).

The infrastructure side is enabled to provide UEs with control information that is relevant for initial access. For instance, a base station (e.g, in case of LAA, the eNB offering the LTE-PCell) can signal to UEs for initial access in a dynamic fashion at least one of the following pieces of information aiming at directing (or re-directing) the UE to a distinct access system (if more then one access system is available for example, in case of LAA) or a distinct cell (e.g. in case of carrier aggregation):
Service (or service class) related information, for instance
   "use the LTE-PCell for transmission of control information",
   "use the LTE-PCell for tracking area updates (TAU)",
   "use the LTE-PCell for VoIP services",
   "use the LAA-SCell for FTP file transfer",
   "use the first access system for control-only information"
   "use the first access system for time sensitive data",
   "use the second access system for delay tolerant data",
Access type method related information, for instance
   "apply contention-free random access only on PCell" (*note: In this case, the UE has obtained a random access preamble previously),*
   "apply contention-based initial access only on SCell No. X",
   "apply contention-free random access on the first access system using preamble Y" (*note: In this case, the configuration message is transmitted not via broadcast means, but dedicated to the UE),*
   "apply contention-based initial access on the second access system",
Inter-Access-System related information re-directing the UE from one access system to the other access system during initial access, for instance
   "use PCell first, but switch to SCell after "n" unsuccessful random access attempts on PCell",
   "use the first access system first, but switch to second access system when instructed to do so" (*note: The instruction may be included in message 2 or message 4 of the random access procedure),*
   "use the second access system first, but switch to first access system when criteria Z is fulfilled",
and combinations of the above.

The control information described above may be understood as configuration parameters (or rules) for conducting initial access. Provisioning may be achieved over dedicated signalling (to one selected UE only), via multicast (to a group of UEs), or via broadcasting means (to all UEs residing in the given cell, e.g. in conjunction with system information provisioning). Provisioning may be achieved either in advance (i.e. prior to initiating the RAP) or during the RAP or both.

The control information pertaining to initial access may be adapted dynamically e.g. based on continuous or sporadic analysis of the load situations on various resources (e.g., on resources of the uplink channels used for initial access) in at least one first or second access system. In this context, analysis of load situations may comprise or be based on measurements or predictions and alike to be performed by one or more network nodes (such as a base station).

In one embodiment of the present invention (e.g., in case of LAA) the load on the uplink resources used for initial access on the LTE-PCell and/or on the LAA-SCell are analysed.

If load on the PRACH in the LTE-PCell is high (e.g., number of simultaneously received preambles is above a threshold), more services or service classes are moved away from the LTE-PCell to the LAA-SCell.

If congestion is detected on the initial access UL resources of the LAA-SCell, more services or service classes are moved away from the LAA-SCell to the LTE-PCell. The LAA-SCell drops out completely, so all services or service classes are moved from the LAA-SCell to the LTE-PCell.

If an amount of unassigned contention-free random access preambles is below a certain threshold in the first access system, the network can preferably let UEs carry out initial access (e.g., for certain services or service classes) in a second access system.

The method for steering initial access mitigates the risk that resources in the first access system are congested with initial access attempts while a second access system has free resources. For example, in an LAA scenario, load can be shifted to an LAA-SCell so that PRACH resources on the LTE-PCell are freed (for instance, for UEs that are about to start time sensitive services, such as VoIP). Alternatively, PRACH resources in LTE-PCell can be reduced in favour of PUSCH resources.

Embodiments of the invention will now be described, by way of example only, with reference to the accompanying drawings in which:
- Fig. 1: shows a known state diagram;
- Fig. 2: is a prior art message flow diagram;
- Fig. 3: is a further prior art message flow diagram;
- Fig. 4: is an illustration of a known LTE resource grid;
- Fig. 5: shows PRACH resources known from LTE;
- Fig. 6: is a more detailed view of known PRACH resources in LTE;
- Fig. 7: shows a network topology suitable for the implementation of the present invention;
- Fig. 8: is a message flow diagram of a first embodiment of the invention;
- Fig. 9: is a message flow diagram of a second embodiment of the invention; and
- Fig. 10: is a message flow diagram of a modification of the second embodiment.

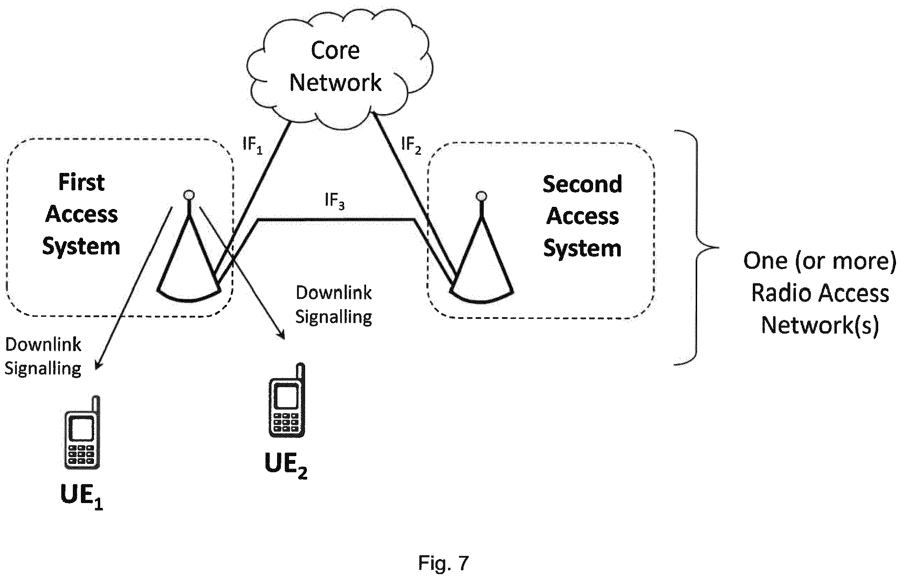

Referring to Fig. 7, there is shown an example network topology with a radio access network (RAN) consisting of a first and a second access system. There may be further first or second access systems (not shown). The first access system may be operating in a licensed frequency band, while the second access system may be operating in an unlicensed frequency band (for instance, in the scope of LAA). If the second access system is operating in an unlicensed spectrum, then LBT (listen before talk) mechanisms may be used to protect other services operating in the same band (e.g. WiFi) from interference caused by LTE (and vice versa).

Interfaces IF₁ and IF₂ connect base station(s) or access point(s) of the first and second access systems with a core network (CN), such as (in case of LTE) an EPC. If the first access system is implemented according to the LTE suite of standards, IF₁ may be an S1 interface interconnecting the respective base station(s) of E-UTRAN with certain EPC nodes, such as the MME (for c-plane traffic) and the SGW (for u-plane traffic). If the second access system is also implemented according to LTE, IF₂ may also be an S1 interface, and IF₃ may be an interface interconnecting one or more base station(s) directly with one another. In alternative architectures, IF₂ may not be present and the second access system is controlled by and its data is routed through the first access system (i.e. via a combination of IF₁ and IF₃).

In case of LTE, a UE in RRC_IDLE may be camping on a cell of the first access system (e.g., an LTE-PCell). Likewise, a UE in RRC_CONNECTED may be connected to a cell of the first access system (e.g., an LTE-PCell). Furthermore, in context of machine type communication (MTC) or internet of things (IoT) a UE may reside in RRC_SUSPENDED mode of operation in a cell of the first access system (e.g., an LTE-PCell).

In all these three states, a UE (e.g., UE₁ in Fig. 7) may receive configuration data common for all UEs via system information broadcasts (SIBs) or other form of system information provisioning, from the LTE-PCell. In addition, a UE in RRC_CONNECTED (e.g., UE₂ in Fig. 7) may also receive some individual configuration data via dedicated downlink signalling from the LTE-PCell. The "downlink signalling" arrows in Figure 7 represent both variants: reception of common configuration data via SIBs and reception of individual configuration data via dedicated downlink signalling.

In the following we assume that we have a special carrier aggregation scenario with an LTE-PCell (operating in the licensed bands) and an LAA-SCell (operating in the unlicensed bands). The invention however shall not be restricted to such a set-up as discussed above.

In Fig. 7, the interface IF₃ may be either a direct physical connection bypassing the core network, or a logical connection that makes use of a combination of IF₁ and IF₂ traversing the core network in between.

A first embodiment of the invention will now be described. This embodiment has characteristics of a collaborative resource analysis with interrogation of initial access related information from an alternative access system and coherent UE configuration.

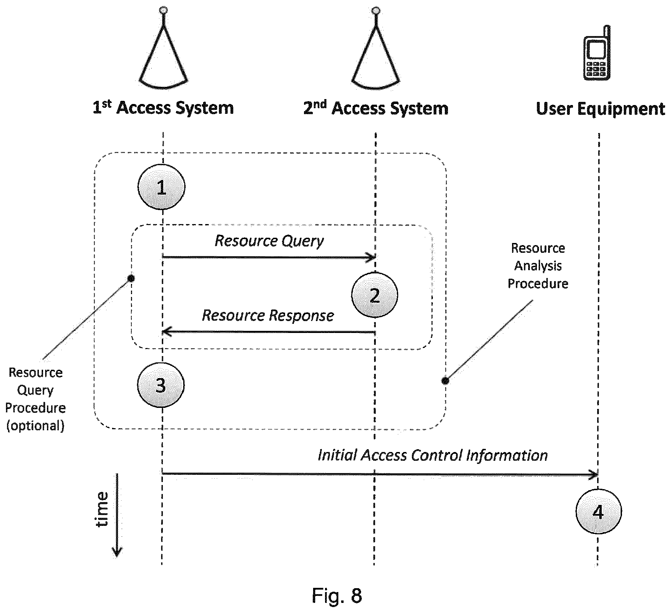

An example of this first embodiment is shown with reference to Fig. 8, where a first access system determines at an event 1 an overload situation e.g., on its own uplink resources for random access (i.e. on the PRACH in case of LTE) or in its processing capabilities. It concludes it would be beneficial to configure (a certain portion of) UEs in its coverage area in such a way, that they perform initial access in an associated second system in the form of an LAA-SCell (for instance, depending on service class).

The first access system sends a resource query message to at least one further access system (here: the LTE-PCell of the first access system sends a query message to the LAA-SCell of the second access system). The "resource query" message may be sent over IF₃ and may comprise at least one of the following pieces of information:
ID of the first access system (source identifier);
ID of the second access system (target identifier);
Transaction ID (means to map the expected response message to this query message);
Message Type (identifier to tag this message as a "Resource Query" message);
Subject of query (e.g., radio resources, processing capabilities, etc.);
Estimated amount of UEs for re-direction to the second access system.

In an event 2 the second access system performs a resource utilization analysis on its own resources as requested by the first access system. In the course of this action, it may for example analyse the resource utilization of its own uplink resources for Initial Access and/or of its own processing capabilities and/or its own backhaul link (IF₂) status, and alike. It may then choose to send back a "resource response" message.

The "resource response" message may be sent back over IF₃ and may comprise at least one of the following pieces of information:
ID of the first access system (source identifier);
ID of the second access system (target identifier);
Transaction ID (means to map this response message to the query message received previously);
Message type (identifier to tag this message as a "resource response" message);
Query results (e.g., available radio resources, underutilized processing capabilities, etc.);
Amount of UEs allowed for re-direction from the first to the second access system.

In an event 3 the first access system composes one or more consolidated configuration message(s) (an "initial access control information" message is shown) for dissemination in the LTE-PCell based on the outcome of its own analysis and/or the data received from at least one further access system (here: the LAA-SCell). A node in the first access system (e.g., the base station offering the LTE-PCell) may compose a set of individual configuration messages for transmission in downlink direction via dedicated signalling to distinct UEs and/or one or more common configuration messages for dissemination in the PCell via a SIB.

With these two different downlink signalling options the first access system has a degree of freedom for sending out common configuration data for initial access as well as individual configuration data for initial access, thereby enabling a flexible method for load distribution (e.g., between an LTE-PCell and an interconnected LAA-SCell). This downlink signalling is shown by means of the "initial access control information" message in Fig. 8.

In the case of LTE, the different possibilities for an "initial access control information" message as shown in Fig. 8 are preferably encoded according to the RRC specification (3GPP TS 36.331). Some examples are given below:

### A) SIB Encoding Examples for Global Settings

The configuration parameters or rules may be translated into system information (e.g., information elements, IEs, according to 3GPP TS 36.331) for dissemination in the DL direction according to the mobile communication system's broadcast capabilities. In this example, a new information element InitialAccess is defined to configure a UE with various random access details for the initial access method according to this invention.

Preferably, it is included in SIB-Type2 (either directly or nested for instance as part of the information element RadioResourceConfigCommonSIB). Alternatively, it is included in any other SIB. A number of possible encoding structures for the novel pieces of information are given in the following:
Firstly, we look at possible encoding variants to direct UEs to one of the two access systems for initial access using service related or service-class specific information (Options 1 through 3).

### Option 1 - IE InitialAccess:

```
 InitialAccess ::   = SEQUENCE {
    ServSpecIAList ::=    SEQUENCE (SIZE (1..maxNumberServiceClass)) OF ServSpecIA
    ServSpecIA ::=    SEQUENCE {
        ServClassID      BIT STRING (SIZE (8)),
        LTE-PCell           BOOLEAN,
        LAA-SCell           BOOLEAN
    }
 }
```

Option 1 shown above appears useful if a list of service classes (with up to *maxNumberServiceClasses*) is defined. For each service class a boolean value for an LTE-PCell and an LAA-SCell (assuming there is only one SCell) may indicate 'support' or 'no support', i.e. the boolean value "True" indicates, that initial access for the listed service class is supported and allowed in the related cell, while "False" indicates, that initial access is not supported or not allowed. The IE ServClassID may be an optional IE that may be omitted when the service class can be identified by the service class number, which is theoretically possible.

### Option 2 - IE InitialAccess:

```
 InitialAccess ::= SEQUENCE {
    PCell ENUMERATED (DelayTolerant, TimeCritical)
    SCell-1 ENUMERATED (DelayTolerant, TimeCritical)
    SCell-2 ENUMERATED (DelayTolerant, TimeCritical)
    ...
    SCell-x ENUMERATED (DelayTolerant, TimeCritical)
 }
```

Option 2 shown above enables indication of the type of cell to be used for initial access depending on the nature of the service requiring connection establishment ('delay tolerant' vs. 'time critical'). Here, it is assumed that more than one SCell exist.

### Option 3 - IE InitialAccess:

```
 InitialAccess ::=    SEQUENCE {
    LTE-PCell ::=    SEQUENCE {
        ServiceType       CHOICE (DelayTolerant, TimeCritical),
        maxNumAttempts       INTEGER(1..16)
    }
    LAA-SCell ::=    SEQUENCE {
        ServiceType       CHOICE (DelayTolerant, TimeCritical),
        maxNumAttempts      INTEGER(1..16)
    }
 }
```

Option 3 described above enables re-direction from a given cell after maxNumAttempts consecutive failures of initial access attempts (performed on said cell) for a specified service category (as indicated by the IE ServiceType).

### B) SIB Encoding Examples for Predefining Values

A fourth option for the IE InitialAccess provides for a pre-configuration of a back-off indicator.

### Option 4 - IE InitialAccess

```
 InitialAccess ::=    SEQUENCE {
    BackOffIndicator::=    SEQUENCE {
        Index15    ENUMERATED {LTE, LAA},
    }
    }
```

Option 4 enables pre-configuration for embodiments 2a and 2b as described below.

For example, the meaning of the Back-Off Indicator used in example 2a can be specified in a flexible manner. So when the Back-Off Indicator is later set to 'Index15', then the UE knows what alternative access system to use.

In an event 4 shown in Fig. 8, at least one "initial access control information" message is stored by the UE, so that the received configuration data pertaining to initial access according to this invention can be used either immediately, or at a later point in time, for example, when a UE intends to perform random access in order to transition to RRC_CONNECTED mode of operation from RRC_IDLE (or RRC_SUSPENDED).

In the former case (immediate use) the configuration data for initial access is suited to initiate initial access on the second access system right after reception of the "initial access control information" message. In the latter case (use at a later point in time), the content of the "initial access control information" message is used to steer a UE's initial access behaviour when a need for connection set-up (UE coming from RRC_IDLE), or session continuation (UE coming from RRC_SUSPENDED) is detected.

Also, for the latter case, trigger(s) for performing initial access on the second access system instead of the first access system could be received during the RAP, for instance as part of a random access response (RAR) message or as part of an RRC connection reject message.

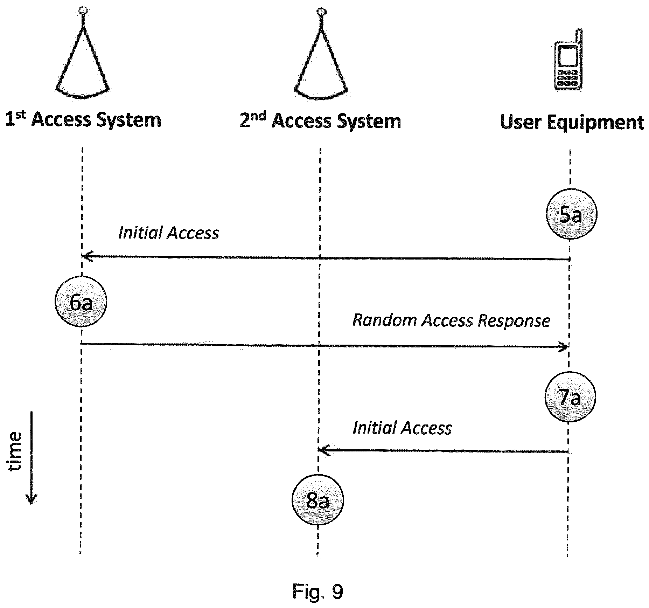

A second embodiment, embodiment 2a, will now be described with reference to Fig. 9. Embodiment 2a has the characteristics of receiving a configuration of a UE for initial access prior to entering the RAP, the UE receiving control commands for initial access during the RAP and the RAR message holding triggers that deflect the UE to another access system.

The arrangement of Fig. 9, is a continuation from event 4 of Fig. 8. That means, we assume that the UE in question has been successfully configured with initial access control information.

After some time, the UE detects a need to enter RRC_CONNECTED (event 5a), so it initiates initial access on the first access system by sending a random access preamble to the LTE-PCell. The network detects the preamble and starts to process it. According to state-of-the-art the network would at least
estimate an UL timing of the UE,
compose an UL grant for the UE,
assign a temporary C-RNTI to the UE which may be used to address the UE in subsequent messages,
derive the ID of the received random access preamble
derive the RA-RNTI from the timeslot and subcarrier number in which the preamble has been received,
and include the first three parameters into a particular random access preamble's random access response (RAR) block for transmission on the DL-SCH, include the ID into the corresponding sub header, and address the random access response messages to the RA-RNTI. In the same DL message, parameters (timer values) to control random access back-off may be present (e.g., in form of a back-off indicator subheader). These back-off parameters may not correspond to a distinct random access response (RAR) instance (cf. 3GPP TS 36.321, sections 6.2.2 and 7.2), i.e. these parameters may concern all UEs that currently expect a random access response message adressed to the same RA-RNTI.

The network may set, in order to indicate a deflection command to a group of UEs, one of the parameters described above to a special (or "predefined") value according to an initial access configuration (by the "initial access control information" message). Alternatively or additionally, the network may include yet another parameter into a modified random access response (RAR) block for transmission in DL direction. In Fig. 9, the creation of the random access response (RAR) happens in event 6a.

The corresponding DL-SCH message is addressed to the same RA-RNTI and may as such contain multiple random access responses (RAR) instances (or blocks) - one for each random access preamble used in the same timeslot. It is noteworthy to mention that any given RAR instance is still not UE specific. Thus, when two or more UEs happened to use the same random access preamble in exactly the same timeslot, the method of embodiment 2a enables the network to deflect a group of UEs (with only one command).

A random access response (RAR) block is received and analysed by a UE (or a group of UEs) in event 7a. If a particular parameter in the given RAR instance was set to a special (or "predefined") value as described above according to the initial access configuration received previously, or if a new parameter is present in the RAR block, the UE (or group of UEs) knows that they have been deflected to a second access system for initial access.

For example, the back-off parameter index 15 (which is currently reserved for future use) could be utilized to enable the inventive method of re-directing a UE (or a group of UEs) from a first access system to a second access system according to this invention.

In one embodiment of the present invention, the type or identity of the second access system can be indicated in a RAR instance of corresponding DL-SCH message, so that the UE (or group of UEs) knows which second access system they are supposed to use (if there is more than one option).

In event 8a at least one UE (out of the group of UEs) performs initial access on another access system.

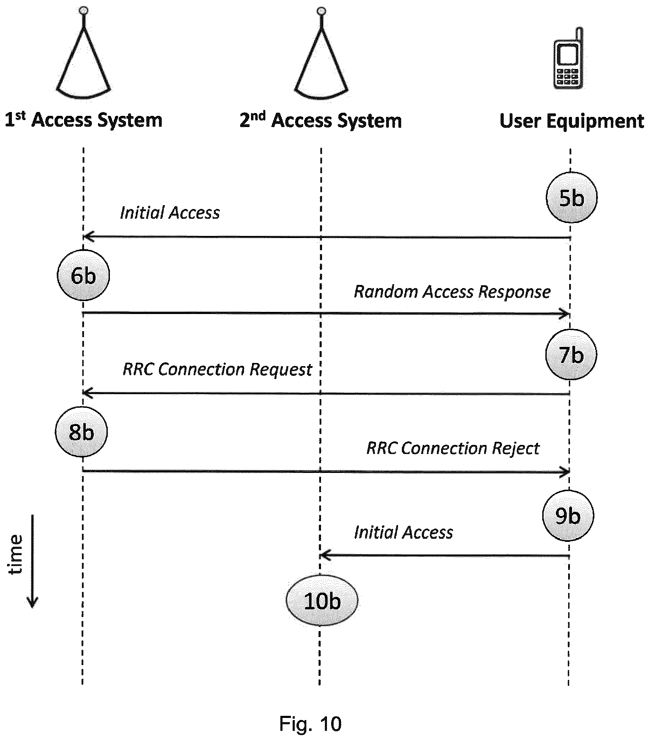

A third embodiment, in the form of a modification to embodiment 2a and referred to as embodiment 2b will now be described with reference to Fig. 10. As for embodiment 2a, embodiment 2b has the characteristics of receiving a configuration of a UE for initial access prior to entering the RAP, the UE receiving control commands for initial access during the RAP and the RAR message holding triggers that deflect the UE to another access system.

Similar to embodiment 2a, Fig. 10 continues from event 4 of Figure 8. That means, we assume that the UE in question has been successfully configured with initial access control information.

After some time, the UE detects a need to enter RRC_CONNECTED (event 5b), so it initiates initial access on the first access system by sending a random access preamble to the LTE-PCell. The network detects the preamble and starts to process it. Similar to embodiment 2a, the network composes for each random access preamble received a random access response (RAR) block for transmission on the DL-SCH (event 6b).

All UEs receiving this downlink message containing one or more RAR blocks may look for their RAR instance. They will then save the temporary C-RNTI, apply the timing advance and proceed with transmitting a RRC connection request message in the uplink direction based on the UL grant given in the RAR (event 7b).

If the network wants to redirect a certain UE to another access system for initial access, it will compose a RRC connection reject message in event 8b. This DL message is addressed to the temporary C-RNTI, but it also echoes the UE's individual NAS identifier (e.g., a random value or the device's C-RNTI). In other words: at this point in time the network's response to the UE's initial access attempt is no longer common, even if the corresponding DL resource for this message is indicated by the temporary C-RNTI on which many UEs may listen. So, in contrast to embodiment 2a above, here we enable individual addressing of a UE for re-direction during initial access from a first access system to a second access system.

The RRC connection reject message is received and analysed by a UE in event 9b. If a particular parameter in said message was set to a special (or "predefined") value as described above according to the initial access configuration received previously, or if a new information element is present in the RRC connection reject message, the UE knows that it has been deflected to a second access system for initial access.

Such an RRC connection reject message may have the following form:

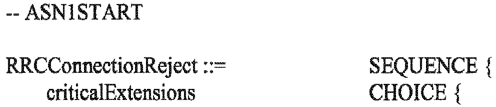

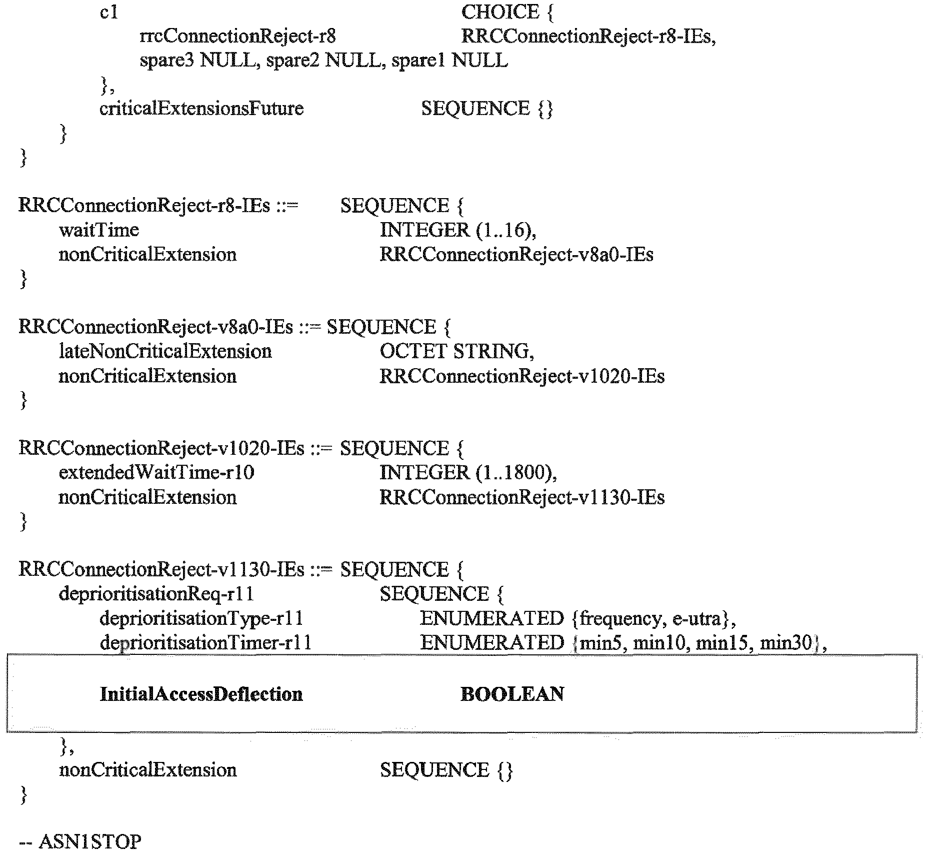

For example, predefined values (or value combinations) for the waitTime or extendedWaitTime information elements could be utilized to enable the method of re-directing a UE from a first access system to a second access system. Alternatively, a new information element InitialAccessDeflection could be introduced (as shown above in the box with bold letters).

In one embodiment of the present invention, the type or identity of the second access system can be indicated in the RRC connection reject message, so that the UE can be informed about which second access system it is supposed to use (if there are more than one option).

As contention resolution may be applied when the RRC connection reject message is sent in downlink direction (e.g., by addition of the corresponding MAC control element for this purpose), this way of signalling would allow deflection of a particular UE (rather than deflection of a group of UEs).

In event 10b the UE performs initial access on another access system

The above names and encoding variants of information elements are to be understood as merely providing examples. There are many other options to convey the necessary information across the air. This invention is not to be considered as being restricted to the encoding examples we disclose here.

Furthermore, the parameters may be sorted in more than one way. For example, they may be collated in a new or already existing hierarchical structure, or grouped together with other information elements for instance in the form of a list.

The term "initial access" used in the present documents comprises also the case in which a UE wants to resume an RRC connection that has been previously suspended (e.g. when the UE is paged or when new data arrives in the UE's uplink buffer), e.g. by sending an *RRCConnectionResumeRequest* Message to the eNB. In such a scenario, the network's response is contained in an *RRCConnectionResume* Message rather than in an *RRCConnectionReject* message. The inventive deflection method is therefore also applicable for usage in an *RRCConnectionResume* message in order to inform or instruct a UE device to perform a second access attempt to an indicated second access system.

## Claims

1. A method performed by a user equipment, UE, device to access a mobile communications network, the method comprising:
receiving control information from one or more base stations, the control information including one or more configuration parameters for controlling initial access between a plurality of access systems; and
performing an initial access attempt to a first access system in accordance with the received control information,
**characterized in that**
in response to the initial access attempt, the UE device receives a radio resource control, RRC, message, the RRC message being one of an RRC connection reject message and an RRC connection resume message, from the first access system, said RRC message informing the UE device to perform a second access attempt to an indicated second access system, and
the UE device performs said second access attempt.

2. The method according to claim 1, wherein the access system used by the user equipment device for the at least one initial access attempt is dependent on a service to be used.

3. The method according to claim 1 or claim 2, wherein a method of performing the initial access attempt is dependent on the access system used for the initial access attempt.

4. A base station for providing an access to a mobile communications network to a plurality of user equipment devices and configured to receive access attempts by the plurality of user equipment, UE, devices using a first access system, the base station being configured to transmit control information including one or more configuration parameters for controlling initial access between a plurality of access systems, **characterized in that** the base station is configured to send a radio resource control, RRC, message informing a UE device to perform a second access attempt to an indicated second access system, the RRC message being one of an RRC connection reject message and an RRC connection resume message.

5. The base station according to claim 4, wherein the control information instructs the user equipment devices as to which access system is to be used for at least one initial access attempt dependent on a service to be used.

6. The base station according to claim 5, wherein the control information instructs the user equipment devices as to a method of performing the at least one initial access attempt dependent on the access system to be used for the initial access attempt.

7. A user equipment, UE, device configured to access a mobile communications network, the device arranged to:
receive control information from one or more base stations, the control information including one or more configuration parameters for controlling initial access between a plurality of access systems; and
perform an initial access attempt to a first access system in accordance with the received control information,
**characterized in that** the UE device is arranged to receive a radio resource control, RRC, message from the first access system, the RRC message being one of an RRC connection reject message and an RRC connection resume message, the RRC message informing the UE device to perform a second access attempt to an indicated second access system, and
to perform said second access attempt.

8. The UE device according to claim 7, wherein the device is configured to use an access system for the initial access attempt dependent on a service to be used.
